# EUROPEAN PATENT SPECIFICATION

(11) **EP 3 056 668 B1**
(45) Date of publication and mention of the grant of the patent: **14.10.2020**
(21) Application number: 16155577.6
(22) Date of filing: 12.02.2016
(51) Int. Cl.: F01D 5/08, F02C 6/08, F02C 7/12, F01D 25/08, F01D 25/12, F01D 25/34

(54) **HIGH PRESSURE COMPRESSOR ROTOR THERMAL CONDITIONING USING COOLED CONDITIONED AIR**
WÄRMEKONDITIONIERUNG EINES HOCHDRUCKVERDICHTERROTORS UNTER VERWENDUNG VON AUFBEREITETER GEKÜHLTER LUFT
CONDITIONNEMENT THERMIQUE DE ROTOR DE COMPRESSEUR À HAUTE PRESSION AU MOYEN D'AIR REFROIDI CONDITIONNÉ

(30) Priority: 13.02.2015 US 201514621444
(43) Date of publication of application: 17.08.2016
(73) Proprietor: United Technologies Corporation, Farmington, CT 06032 (US)
(72) Inventor: HIESTER, Paul J., Glastonbury, CT 06033 (US); FORCIER, Matthew P., South Windsor, CT 06074 (US)
(74) Representative: Dehns

(56) References cited:
- EP-A1- 1 533 473
- EP-A2- 1 736 635
- US-A1- 2013 219 907

## Description

### BACKGROUND OF THE INVENTION

This application relates to extracting compressed air for thermal conditioning of a high pressure compressor rotor.

Gas turbine engines used on aircraft typically include a fan delivering air into a bypass duct and into a compressor section. Air from the compressor is passed downstream into a combustion section where it is mixed with fuel and ignited. Products of this combustion pass downstream over turbine rotors, driving them to rotate.

Turbine rotors drive compressor and fan rotors. Historically, the fan rotor was driven at the same speed as a turbine rotor. More recently, it has been proposed to include a gear reduction between the fan rotor and a fan drive turbine. With this change, the diameter of the fan has increased dramatically and a bypass ratio or volume of air delivered into the bypass duct compared to a volume delivered into the compressor, has increased. With this increase in bypass ratio, it becomes more important to efficiently utilize the air that is delivered into the compressor.

One factor that increases the efficiency of the use of this air is to have a higher pressure at the exit of a high pressure compressor. This high pressure results in a high temperature increase. The temperature at the exit of the high pressure compressor is known as T₃ in the art.

There is a stress challenge to increasing T₃ on a steady state basis, due largely to material property limits called "allowable stress" at a given maximum T₃ level. At the maximum, a further increase in a design T₃ presents challenges to achieve a goal disk life. In particular, as the design T₃ is elevated, a transient stress in the disk increases. This is true since the radially outer portions of a high pressure compressor rotor (i.e., the blades and outermost surfaces of the disk or blisk), which are in the path of air, see an increased heat rapidly during a rapid power increase. Such an increase occurs, for example, when the pilot increases power during a take-off roll. However, a rotor disk bore does not see the increased heat as immediately. Thus, there are severe stresses due to the thermal gradient between the disk bore and the outer rim region.

Thermal gradient challenges are greatest during large changes in power setting. For instance, when an associated aircraft moves from idle to take-off, or cruise to decent. It is possible that the thermal stress in the disk is much greater than the stress due to the centrifugal force on the disk. The engine has typically been at low speed or idle as the aircraft waits on the ground and then, just before take-off, the speed of the engine is increased dramatically. Disk thermal gradient stresses may result in a compressor design that cannot achieve desired pressures.

EP 1 736 635 A2 discloses a prior art gas turbine engine in accordance with the preamble of claim 1 and a prior art method in accordance with the preamble of claim 2.

### SUMMARY OF THE INVENTION

According to a first aspect of the present invention, there is provided a gas turbine engine as set forth in claim 1.

According to a further aspect of the present invention, there is provided a method as set forth in claim 2.

In another embodiment according to any of the previous embodiments, the turbine conditioning air is received from a compressor air supply.

In another embodiment according to the previous embodiment, the air compressor supply passes across a tangential on board injector before passing radially inwardly.

In another embodiment according to the previous embodiments, the air leaving the tangential onboard injector also has a portion passing radially outwardly to cool the disk of the turbine rotor.

In another embodiment according to any of the previous embodiments, a fan rotor is positioned upstream of the compressor, and delivers air into a bypass duct, and toward the compressor as core air. The fan rotor is driven by a second turbine rotor through a gear reduction.

These and other features may be best understood from the following drawings and specification.

### BRIEF DESCRIPTION OF THE DRAWINGS

Figure 1 schematically shows a gas turbine engine.
Figure 2 shows a prior art arrangement for cooling a compressor disk.
Figure 3 shows a disclosed cooling arrangement according to the present invention.

### DETAILED DESCRIPTION

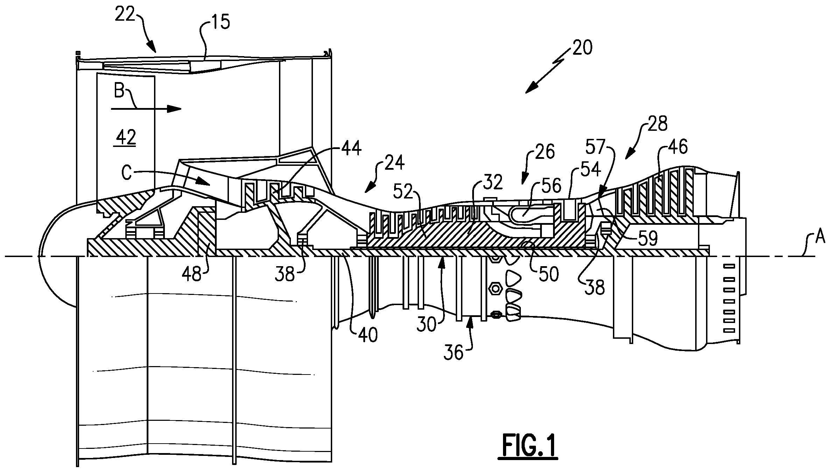

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3:1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45 (1.45:1). "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

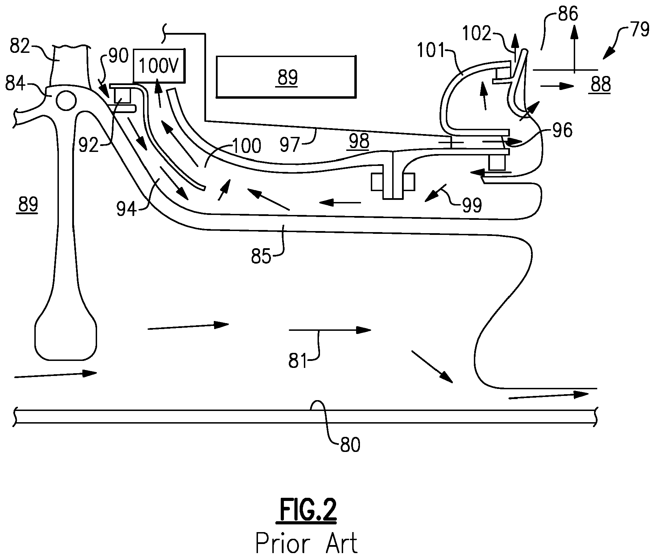

A prior art engine 79 is illustrated in Figure 2. A shaft 80 defines an outer surface for receiving a cooling air 81 headed to downstream turbine sections.

Compressor rotor blades 82 (only one of which is illustrated) are associated with a compressor disk or rim 84. A tie shaft 85 connects to first turbine blades 86 (only one of which is illustrated) The first turbine blades 86 are associated with a disk 88. As known, a combustor 89 sits between disks 84 and 88.

As known, the temperature defined downstream of the blades 82 would be desirably increased. However, there are challenges to doing so. In particular, the temperature of the compressed air being moved by the blades 82 heats the outer peripheral portions, such as the outer rim 84, much more rapidly than bores within the compressor rotor disk 84. This can cause challenges as mentioned above in the Background of the Invention section.

It is known that air such as shown schematically at 90, passes across a seal 92 and across the disk 84. This air passes, as shown at 94, along an outer surface of the tie shaft 85.

Turbine conditioning air 96 is received from an air supply 97. Air supply 97 taps the air from a compressor discharge section and passes it through a tangential on board injector 98, which causes a swirl in the air. This air is then driven inwardly, as shown at 99, and the airflow 99 mixes with the airflow 94, and exits through an exit 100 to vane 100V, shown schematically. A further portion of the air at 96 moves radially outwardly and across a seal 101, as shown at 102, to cool disk 88.

The airflow 90 is bled directly from the gas path. The gas path temperature reacts very quickly to engine power changes. Thus the airflow at 90 also responds quickly, and subsequently the disk 84 responds quickly. This is not desirable because of thermal gradients.

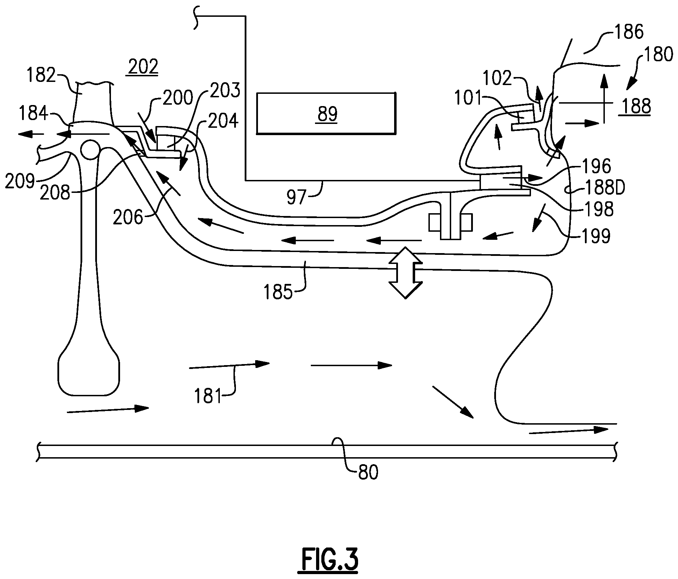

Figure 3 shows an engine 180. The shaft 80 again defines an outer surface for a cooling airflow 181. The last compressor blades 182 rotate with disk 184. The tie shaft 185 connects the turbine rotor blades 186 and disk 188 to drive the compressor 182/184.

The outer flow 102 is generally as shown in Figure 2. However, the air supply 97 now passes as airflow 196 leaving tangential on board injector 198, which might have a somewhat large cross-sectional area than the Figure 2 prior art engine. The air 196 deflects off a surface 188D of disk 188. The airflow 196 then passes radially inwardly at 199 scrubbing the turbine disk web. Flow 199 also passes along an axial length of the tie shaft 185 scrubbing its surface. Some airflow 200 from a location 202 downstream of blade 182 passes across seal 203, as shown at 204, to mix with the airflow 199. The mixed air 206 passes across a gap 208 and conditions the disk 184.

When the engine 180 moves from lower power to higher power (as an example from idle to take-off), the air 199 will be hotter than a number of features it will pass along. As an example, the turbine disk surface 188D and tie shaft 185 act as heat sinks. The heat sinks are heated by air 199, which cools the air. Thus, when the air reaches the compressor disk 184, it will be cooler then gaspath temperature, which would slow the thermal response of the compressor disk 184 rim compared to prior art. This will delay the transient behavior of the compressor disk 184, or condition the disk. This makes the compressor disk thermal response slower, and will better match the response within the bore 209 of the disk.

Conversely, when the engine 180 cycles from high power to low power, the heat sinks will act to heat the air flow at 199, such that the compressor disk 184 will be heated by the air 206, to better match the response of the bore 209. As such, the air flow 206 will condition the compressor disk 184 at both conditions.

For purposes of the claims, the air 199 is referred to as turbine conditioning air.

In contrast to the Figure 2 engine, the air 199 passing radially inwardly and downstream of the turbine disk 188 is now utilized to condition the compressor disk 184. The air 206 has passed along the entire axial length of the tie shaft 185 and has been dramatically cooled/heated. Thus, the airflow 206 is able to better condition the disk 184 and the thermal gradients and stresses, as described above, are less pronounced.

While the turbine disk 188 and tie shaft 185 are disclosed as the heat sinks, the air may be routed from the turbine disk 188 to the compressor disk 184, along or through other components.

The disclosed gas turbine engine 180 could be said to have a compressor including a disk 184 and a blade 182. A turbine rotor has a disk 188 and a blade 186. Turbine air is supplied to condition the turbine rotor and passes radially inwardly 199. A tie shaft 185 connects the compressor and the turbine rotor. The air passes along an axial length of the tie shaft 185. The turbine conditioning air is cooled as it passes along an axial length of the tie shaft 185. The turbine conditioning air then passes across the disk 184 of the compressor to cool the disk.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a compressor (24) including a disk (184) and a blade (182);
a turbine rotor (188) having a disk and a blade (186); and
turbine conditioning air (199) supplied to said turbine rotor (188), wherein a tie shaft (185) connects said compressor disk (184) and said turbine rotor (188), and said turbine conditioning air (199) passing along an axial length of said tie shaft (185),
**characterised in that**:
the gas turbine engine (20) is configured such that an inner cooling air (181) is supplied between an outer peripheral surface of a drive shaft (80) which is radially inwardly of said tie shaft (185), and an inner peripheral surface of said tie shaft (185), such that said turbine conditioning air (199) is cooled by said inner cooling air (181) as said turbine conditioning air (199) passes along the axial length of said tie shaft (185), and such that said turbine conditioning air (199) passes across said disk (184) of said compressor (24) to condition said disk (184), by minimising thermal gradients between a disk bore and an outer disk rim region.

2. A method of operating a gas turbine engine (20) comprising the steps of:
supplying a turbine conditioning air (199) to a turbine rotor (188); and
providing a tie shaft (185) connecting a disk (184) of acompressor (24) to said turbine rotor (188), and said turbine conditioning air (199) passing along said tie shaft (185) before passing across said disk (184) of said compressor (24),
**characterised in that**:
an inner cooling air (181) is supplied between an outer peripheral surface of a drive shaft (80) which is radially inwardly of said tie shaft (185), and an inner peripheral surface of said tie shaft (185), such that said turbine conditioning air (199) is cooled by said inner cooling air (181) as said turbine conditioning air (199) passes along the axial length of said tie shaft (185), and the method further comprises passing said turbine conditioning air (199) across said disk (184) of said compressor (24) to condition the disk (184) of the compressor (24), by minimising thermal gradients between a disk bore and an outer disk rim region.

3. The method or gas turbine engine (20) as set forth in any preceding claim, wherein said turbine conditioning air (199) is received from a compressor air supply (196).

4. The method or gas turbine engine (20) as set forth in any preceding claim, wherein said air compressor supply (196) passes across a tangential on board injector (198) before passing radially inwardly.

5. The method or gas turbine engine (20) as set forth in claim 4, wherein said air leaving said tangential onboard injector (198) also has a portion (102) passing radially outwardly to cool said disk of said turbine rotor (188).

6. The method or gas turbine engine (20) as set forth in any preceding claim, wherein a fan rotor (42) is positioned upstream of said compressor (24), said fan rotor (42) delivering air into a bypass duct, and toward said compressor (24) as core air, and said fan rotor (42) being driven by a second turbine rotor (46) through a gear reduction.

## Patentansprüche

1. Gasturbinentriebwerk (20), umfassend:
einen Verdichter (24), der eine Scheibe (184) und eine Schaufel (182) beinhaltet;
einen Turbinenrotor (188), der eine Scheibe und eine Schaufel (186) aufweist; und
Turbinenaufbereitungsluft (199), die dem Turbinenrotor (188) zugeführt wird, wobei eine Binderwelle (185) die Verdichterscheibe (184) und den Turbinenrotor (188) verbindet, und wobei die Turbinenaufbereitungsluft (199) eine axiale Länge der Binderwelle (185) entlangströmt,
**dadurch gekennzeichnet, dass**:
das Gasturbinentriebwerk (20) derart konfiguriert ist, dass eine innere Kühlluft (181) zwischen einer äußeren peripheren Oberfläche einer Antriebswelle (80), welche radial einwärts von der Binderwelle (185) liegt, und einer inneren peripheren Oberfläche der Binderwelle (185) derart zugeführt wird, dass die Turbinenaufbereitungsluft (199) durch die innere Kühlluft (181) gekühlt wird, während die Turbinenaufbereitungsluft (199) an der axialen Länge der Binderwelle (185) entlangströmt, und derart, dass die Turbinenaufbereitungsluft (199) über die Scheibe (184) des Verdichters (24) strömt, um die Scheibe (184) durch ein Minimieren von Wärmegradienten zwischen einer Scheibenbohrung und einem äußeren Scheibenrandbereich aufzubereiten.

2. Verfahren zum Betreiben eines Gasturbinentriebwerks (20), das die folgenden Schritte umfasst:
Zuführen einer Turbinenaufbereitungsluft (199) zu einem Turbinenrotor (188); und
Bereitstellen einer Binderwelle (185), die eine Scheibe (184) von einem Verdichter (24) mit dem Turbinenrotor (188) verbindet, und wobei die Turbinenaufbereitungsluft (199) an der Binderwelle (185) entlangströmt, bevor sie über die Scheibe (184) des Verdichters (24) strömt,
**dadurch gekennzeichnet, dass**:
eine innere Kühlluft (181) zwischen einer äußeren peripheren Oberfläche einer Antriebswelle (80), welche radial einwärts von der Binderwelle (185) liegt, und einer inneren peripheren Oberfläche der Binderwelle (185) derart zugeführt wird, dass die Turbinenaufbereitungsluft (199) durch die innere Kühlluft (181) gekühlt wird, während die Turbinenaufbereitungsluft (199) an der axialen Länge der Binderwelle (185) entlangströmt, und wobei das Verfahren ferner ein Strömen der Turbinenaufbereitungsluft (199) über die Scheibe (184) des Verdichters (24) umfasst, um die Scheibe (184) des Verdichters (24) durch ein Minimieren von Wärmegradienten zwischen einer Scheibenbohrung und einem äußeren Scheibenrandbereich aufzubereiten.

3. Verfahren oder Gasturbinentriebwerk (20) nach einem der vorhergehenden Ansprüche, wobei die Turbinenaufbereitungsluft (199) von einer Verdichter-Luftzufuhr (196) empfangen wird.

4. Verfahren oder Gasturbinentriebwerk (20) nach einem der vorhergehenden Ansprüche, wobei die Verdichter-Luftzufuhr (196) über einen tangentialen On-Boardinjektor (198) läuft, bevor sie radial nach innen läuft.

5. Verfahren oder Gasturbinentriebwerk (20) nach Anspruch 4, wobei die Luft, die aus dem tangentialen On-Boardinjektor (198) strömt, auch einen Abschnitt (102) aufweist, der radial nach außen strömt, um die Scheibe des Turbinenrotors (188) zu kühlen.

6. Verfahren oder Gasturbinentriebwerk (20) nach einem der vorhergehenden Ansprüche, wobei ein Bläserrotor (42) stromaufwärts von dem Verdichter (24) positioniert ist, wobei der Bläserrotor (42) Luft in eine Bypass-Leitung und in Richtung des Verdichters (24) als Kernluft leitet, und wobei der Bläserrotor (42) durch einen zweiten Turbinenrotor (46) mittels Getriebeuntersetzung angetrieben wird.

## Revendications

1. Moteur à turbine à gaz (20) comprenant :
un compresseur (24) comportant un disque (184) et une pale (182) ;
un rotor de turbine (188) ayant un disque et une pale (186) ; et
un air de conditionnement de turbine (199) fourni audit rotor de turbine (188), dans lequel un arbre de liaison (185) relie ledit disque de compresseur (184) et ledit rotor de turbine (188), et ledit air de conditionnement de turbine (199) passant le long d'une longueur axiale dudit arbre de liaison (185),
**caractérisé en ce que** :
le moteur à turbine à gaz (20) est configuré de sorte qu'un air de refroidissement interne (181) est fourni entre une surface périphérique externe d'un arbre d'entraînement (80) qui est radialement vers l'intérieur dudit arbre de liaison (185), et une surface périphérique interne dudit arbre de liaison (185), de sorte que ledit air de conditionnement de turbine (199) est refroidi par ledit air de refroidissement interne (181) lorsque ledit air de conditionnement de turbine (199) passe le long de la longueur axiale dudit arbre de liaison (185), et de sorte que ledit air de conditionnement de turbine (199) passe à travers ledit disque (184) dudit compresseur (24) pour conditionner ledit disque (184), en minimisant les gradients thermiques entre un alésage de disque et une région de bord de disque externe.

2. Procédé de fonctionnement d'un moteur à turbine à gaz (20) comprenant les étapes :
de fourniture d'un air de conditionnement de turbine (199) à un rotor de turbine (188) ; et
de fourniture d'un arbre de liaison (185) reliant un disque (184) d'un compresseur (24) audit rotor de turbine (188), et ledit air de conditionnement de turbine (199) passant le long dudit arbre de liaison (185) avant de passer à travers ledit disque (184) dudit compresseur (24),
**caractérisé en ce que** :
un air de refroidissement interne (181) est fourni entre une surface périphérique externe d'un arbre d'entraînement (80) qui est radialement vers l'intérieur dudit arbre de liaison (185), et une surface périphérique interne dudit arbre de liaison (185), de sorte que ledit air de conditionnement de turbine (199) est refroidi par ledit air de refroidissement interne (181) lorsque ledit air de conditionnement de turbine (199) passe le long de la longueur axiale dudit arbre de liaison (185), et le procédé comprend en outre le passage dudit air de conditionnement de turbine (199) à travers ledit disque (184) dudit compresseur (24) pour conditionner le disque (184) du compresseur (24), en minimisant les gradients thermiques entre un alésage de disque et une région de bord de disque externe.

3. Procédé ou moteur à turbine à gaz (20) selon une quelconque revendication précédente, dans lequel ledit air de conditionnement de turbine (199) est reçu depuis une alimentation en air de compresseur (196).

4. Procédé ou moteur à turbine à gaz (20) selon une quelconque revendication précédente, dans lequel ladite alimentation de compresseur d'air (196) passe à travers un injecteur embarqué tangentiel (198) avant de passer radialement vers l'intérieur.

5. Procédé ou moteur à turbine à gaz (20) selon la revendication 4, dans lequel ledit air sortant dudit injecteur embarqué tangentiel (198) a également une partie (102) passant radialement vers l'extérieur pour refroidir ledit disque dudit rotor de turbine (188) .

6. Procédé ou moteur à turbine à gaz (20) selon une quelconque revendication précédente, dans lequel un rotor de soufflante (42) est positionné en amont dudit compresseur (24), ledit rotor de soufflante (42) délivrant de l'air dans un conduit de dérivation, et vers ledit compresseur (24) sous forme d'air central, et ledit rotor de soufflante (42) étant entraîné par un second rotor de turbine (46) par l'intermédiaire d'un réducteur.
